# EUROPÄISCHE PATENTANMELDUNG

(11) **EP 0 560 166 A1**
(43) Veröffentlichungstag der Anmeldung: **15.09.1993**
(21) Anmeldenummer: 93103225.4
(22) Anmeldetag: 01.03.1993
(51) Int. Cl.: C01B 13/11

(54) **Verfahren und Vorrichtung zur Erzeugung von Ozon**

(30) Priorität: 10.03.1992 DE 4207585
(71) Anmelder: Linde Aktiengesellschaft, D-65189 Wiesbaden (DE); WEDECO GmbH, D-32051 Herford (DE)
(72) Erfinder: Ziemann, Georg, Dipl.-Ing., W-8012 Ottobrunn (DE); Gänsch, Horst, Dipl.-Ing., W-4807 Borgholzhausen (DE); Leitzke, Ortwin, Dr. Dipl.-Ing., W-4044 Kaarst (DE)
(74) Vertreter: Schaefer, Gerhard, Dr.

(57) **Zusammenfassung**

Die Erfindung betrifft ein Verfahren und eine Vorrichtung zur Erzeugung von Ozon aus einem Sauerstoff-haltigen Einsatzgas. Um eine Senkung der Betriebstemperatur des Ozonerzeugers 1 und damit eine Steigerung der Ozonausbeute zu erreichen, wird vorgeschlagen, das Sauerstoff-haltige Einsatzgas mit einem tiefkalt verflüssigten Gas abzukühlen. Hierzu wird vorzugsweise flüssiger Sauerstoff aus einem Flüssigsauerstofftank 19 über Leitung 14 in die Zuleitung 5 für das Einsatzgas eingespeist.

## Beschreibung

Die Erfindung betrifft ein verfahren zur Erzeugung von Ozon aus einem Sauerstoff-haltigen Einsatzgas.

Ozon wird in der Verfahrenstechnik bekanntermaßen in vielen Anwendungsfällen eingesetzt. Insbesondere in der Wassertechnik hat die Ozonbehandlung eine gewisse Bedeutung erlangt. So werden beispielsweise Trinkwasser, Brauchwasser, Prozeßwasser, Mineralwasser, Badewasser und Abwasser häufig mit Ozon behandelt, um z.B. Bakterien und Keime abzutöten, Viren zu inaktivieren, Hefen und Pilze abzutöten, Gerüche zu vernichten, Humine zu zerstören, organische Substanzen zu reduzieren, Fäkalstoffe zu beseitigen, Fette zu spalten, Phenole zu entfernen, Detergentien zu beseitigen, Schwefel, Eisen, Mangan oder Cyanide zu entfernen und das Wasser mit Sauerstoff anzureichern. Üblicherweise wird hierzu in das zu behandelnde Wasser Ozongas eingetragen.

Zur Erzeugung des Ozons stehen verschiedene Methoden zur Verfügung. Das Ozon kann aus einem Sauerstoff-haltigen Gas, z.B. Luft oder technisch reinem Sauerstoff, durch stille elektrische Entladung an einem Röhrenspalt erzeugt werden. Hierbei wird also elektrische Energie genutzt, um das Ozon in einer endothermischen Reaktion nach folgender Reaktionsgleichung zu erzeugen:

1,5 O₂ → O₃ δH = 144,44 KJ/mol

Eine andere Möglichkeit besteht darin, photochemische Energie zur Erzeugung des Ozons einzusetzen. Hierbei wird das Sauerstoff-haltige Gas mit UV-Licht bestrahlt. Auch der Einsatz strahlungschemischer Energie ist möglich, d.h. die Ionisation der Sauerstoffmoleküle mittels γ Strahlung. Eine weitere Möglichkeit besteht in der Nutzung elektrochemischer Energie. Die Erzeugung des Ozons erfolgt dabei mittels Wasserelektrolyse. An Bleioxid-Elektroden entstehen im Anodengas O⁻-Ionen, O und O₂.

Aus Wirtschaftlichkeitsgründen hat sich in der Praxis jedoch der Einsatz der elektrischen Energie durchgesetzt. Prinzipiell wird dabei immer noch die Erfindung von Werner von Siemens angewendet, die stille Entladung am Röhrenspalt. Hierfür werden im wesentlichen zwei ineinander gesteckte Rohre verwendet, wobei das Ozon am Ringspalt zwischen Außenrohr und Innenrohr entsteht.

Die Erzeugung des Ozons ist bisher mit hohen Betriebskosten verbunden. Um 1 kg Ozon aus Sauerstoff in einer Konzentration von 100 g/m³ zu erzeugen, sind in der Regel 6 bis 10 KW elektrische Energie erforderlich. Soll das erzeugte Ozon z.B. in der Abwasserbehandlung oder der Sickerwasserbehandlung bei Mülldeponien eingesetzt werden, so ist mit einem Sauerstoffbedarf (je nach speziellem Anwendungsfall) in der Größenordnung von 1,0 bis 15,0 kg pro 1 kg Ozon zu rechnen. Für den Betreiber einer derartigen Behandlungsanlage fallen somit erhebliche Kosten an.

Um die Betriebskosten bei der Ozonerzeugung zu senken, wird nach dem Stand der Technik die Ozonerzeugungseinrichtung, der sogenannte Ozonerzeuger, mit Wasser gekühlt. Dadurch läßt sich die im Ozonerzeuger anfallende Wärmeenergie abführen, wodurch der Wirkungsgrad des Ozonerzeugers gesteigert und die Ozonausbeute erhöht werden können. In der Praxis wird dabei Kühlwasser über die Außenelektrode des Ozonerzeugers geleitet.

Der vorliegenden Erfindung liegt die Aufgabe zugrunde, ein Verfahren und eine Vorrichtung zur Verfügung zu stellen, die eine wirtschaftliche Ozonerzeugung ermöglichen.

Diese Aufgabe wird erfindungsgemäß dadurch gelöst, daß das Sauerstoff-haltige Einsatzgas durch Wärmetausch mit einem tiefkalt verflüssigtem Gas abgekühlt wird.

Der Erfindung liegt die Erkenntnis zugrunde, daß durch weiteres Senken der Betriebstemperatur des Ozonerzeugers dessen Wirkungsgrad und damit die Ozonausbeute wesentlich gesteigert werden können. Während bei der herkömmlichen Wasserkühlung lediglich die im Ozonerzeuger erzeugte Wärmeenergie abgeführt werden kann, wird mit der Erfindung eine weitergehende Senkung der Betriebstemperatur des Ozonerzeugers erreicht. Das bei der Wasserkühlung im Kreislauf geführte Wasser erwärmt sich darüberhinaus während des Betriebs des Ozonerzeugers, wodurch der Wirkungsgrad im Betriebsverlauf abnimmt. Eine Erhöhung der Wassertemperatur um lediglich 1° bewirkt bereits eine Reduktion der Ozonausbeute um 2 %. Im Gegensatz dazu steht das tiefkalt verflüssigte Gas stets mit derselben (tiefen) Temperatur zur Verfügung.

Da üblicherweise als Einsatzgas für die Ozonerzeugung technisch reines Sauerstoffgas aus einem Flüssigsauerstofftank eingesetzt wird, steht ohnehin ein tiefkalt verflüssigtes Gas, nämlich flüssiger Sauerstoff, zur Kühlung des Einsatzgases zur Verfügung. Daher fallen keine zusätzlichen Kosten für die Bereitstellung des tiefkalt verflüssigten Gases an.

Das tiefkalt verflüssigte Gas kann über einen Wärmetauscher mit dem Einsatzgas in indirekten Wärmeaustausch gebracht werden. Prinzipiell können dabei auch andere Flüssiggase als flüssiger Sauerstoff als Kühlmittel verwendet werden. Exemplarisch seien hier flüssiger Stickstoff und flüssiges Helium genannt.

Gemäß einer besonders bevorzugten Ausführungsform der Erfindung wird jedoch flüssiger Sauerstoff in direkten Wärmekontakt mit dem Einsatzgas gebracht, d.h. der flüssige Sauerstoff wird dem Einsatzgas zugemischt. Dies bringt die Vorteile mit sich, daß einerseits keine Wärmeübertragungsverluste am Wärmetauscher anfallen und andererseits das Kühlmittel flüssiger Sauerstoff gleichzeitig als Einsatzgas mitgenutzt werden kann.

Üblicherweise fällt am Verbrauchsort des Ozons, d.h. z.B. in einem Reaktor zur Ozonbehandlung von Abwasser, Trinkwasser, Brauchwasser etc., Sauerstoff-haltiges Abgas an. Dieses Abgas wird typischerweise aufbereitet, d.h. getrocknet und gegebenenfalls gereinigt, und schließlich zum Ozonerzeuger zurückgeführt, wo es wiederum als Einsatzgas dient. Das Sauerstoffhaltige Einsatzgas wird somit ständig im Kreis geführt, wodurch der Bedarf an frischem Einsatzgas um ca. 90 % vermindert wird. Die Sauerstoff-Nachspeisemenge, also die Menge, die zur Aufrechterhaltung des Prozesses ständig nachgeführt werden muß, beträgt ca. 10 % der durch den Ozonerzeuger durchgesetzen Gasmenge. Zweckmäßigerweise wird gerade diese Sauerstoff-Nachspeisemenge durch den Zusatz von flüssigem Sauerstoff dem rückgeführten Abgas zugemischt.

Vorzugsweise wird das Mischungsverhältnis von tiefkalt verflüssigtem Gas und Einsatzgas z.B. mittels Steuerventilen so eingestellt, daß sich eine Mischtemperatur von ca. 0° C bis ca. -20°C ergibt. Grundsätzlich erhöht sich die Ozonausbeute mit abnehmender Betriebstemperatur des Ozonerzeugers. Um sehr niedrige Temperaturen von unter -20° C zu erreichen, ist es jedoch in den meisten Anwendungsfällen notwendig, über die oben erwähnte Sauerstoff-Nachspeisemenge hinaus flüssigen Sauerstoff in das Einsatzgas einzumischen. In diesem Fall müssen die Kosten für den zusätzlich verbrauchten Sauerstoff in die Wirtschaftlichkeitsberechnung mit aufgenommen werden.

Die Erfindung betrifft außerdem eine Vorrichtung zur Erzeugung von Ozon mit einem Ozonerzeuger, der eine Zuleitung für ein Sauerstoff-haltiges Einsatzgas und eine Ableitung für das Ozon aufweist. Erfindungsgemäß steht die Zuleitung für das Einsatzgas mit einer Kühlleitung für ein tiefkalt verflüssigtes Gas in Wärmekontakt.

Zu diesem Zweck kann ein Wärmetauscher in die Zuleitung für das Einsatzgas eingeschaltet sein, der mit der Kühlleitung für das tiefkalt verflüssigte Gas verbunden ist. Bevorzugt mündet jedoch die Kühlleitung für das tiefkalt verflüssigte Gas direkt in die Zuleitung für das Einsatzgas, um einen direkten Wärmetausch zwischen dem Einsatzgas und dem tiefkalt verflüssigten Gas zu ermöglichen. Das andere Ende der Kühlleitung steht mit einer Versorgungseinrichtung für tiefkalt verflüssigtes Gas in Verbindung. Vorzugsweise ist die Versorgungseinrichtung als Flüssiggastank für flüssigen Sauerstoff ausgebildet.

Um eine gleichmäßige Versorgung des Ozonerzeugers mit Einsatzgas auch bei z.B. schwankender Abgasrückführungsrate zu gewährleisten, sind gemäß einer Weiterbildung des Erfindungsgedankens in der Zuleitung für das Einsatzgas und in der Kühlleitung für das tiefkalt verflüssigte Gas jeweils in Strömungsrichtung vor der Mündung der Kühlleitung in die Zuleitung Durchflußmesser angeordnet, die über eine Steuereinheit mit Steuerventilen in der Zuleitung für das Einsatzgas und in der Kühlleitung in Wirkverbindung stehen.

Um auch die Betriebstemperatur des Ozonerzeugers konstant halten zu können, ist in einer bevorzugten Ausführungsform der Erfindung darüberhinaus in der Zuleitung für das Einsatzgas in Strömungsrichtung nach der Mündung der Kühlleitung in die Zuleitung ein Temperaturmeßgerät angeordnet, das über die Steuereinheit mit den Steuerventilen in Wirkverbindung steht.

Die Erfindung eignet sich für alle Anwendungsfälle, bei denen Ozon z.B. als Behandlungsgas eingesetzt werden soll. Exemplarisch sei hier die Wassertechnik genannt, bei der Ozon zur Aufbereitung von Trinkwasser, Brauchwasser, Prozeßwasser, Mineralwasser, Badewasser und Abwasser verwendet wird. Mit der Erfindung können die Betriebskosten einer entsprechenden Anlage zur Wasseraufbereitung wesentlich verringert werden. Bei herkömmlichen Anlagen zur Wasseraufbereitung mittels Ozon beträgt der Anteil des Energiebedarfs zur Ozonerzeugung am Gesamtenergiebedarf ca. 70 %. Deshalb wirken sich die mit der Erfindung erzielbaren Sparmaßnahmen bei der Ozonerzeugung erheblich auf die Gesamtbetriebskosten aus.

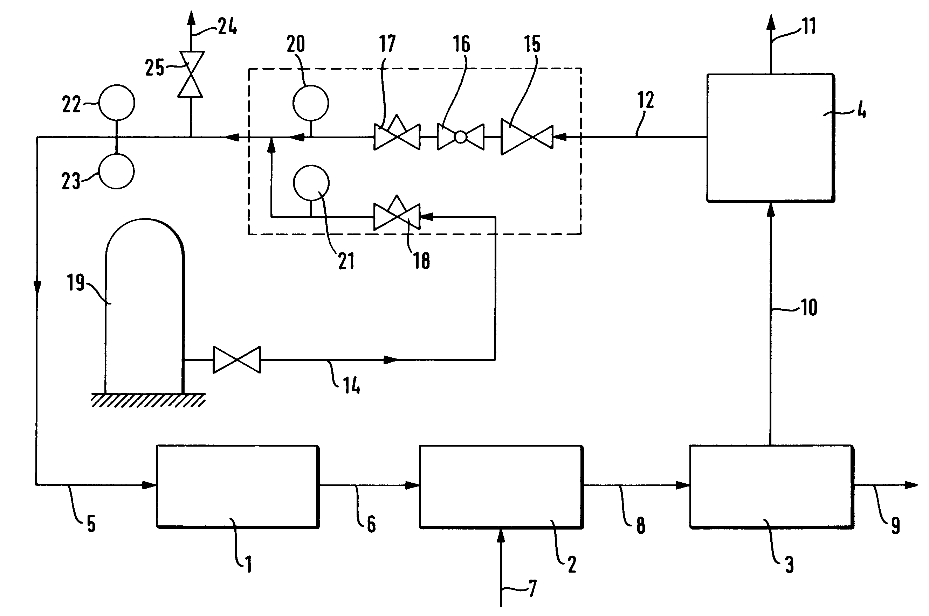

Im folgenden soll die Erfindung anhand eines in der Figur schematisch dargestellten Ausführungsbeispiels näher erläutert werden.

Die Figur zeigt ein Fließschema einer Ozonanlage zur Wasseraufbereitung.

In einem Ozonerzeuger 1 wird durch stille elektrische Entladung an einem Röhrenspalt Ozon erzeugt. Als Einsatzgas für den Ozonerzeuger 1 dient gasförmiger Sauerstoff, der über eine Zuleitung 5 dem Ozonerzeuger 1 zugeführt wird. Das Ozon wird über Leitung 6 in einen Mischbehälter 2 eingeleitet und dort mit dem zu behandelnden Wasser vermischt. Das zu behandelnde Wasser, z.B. Sickerwasser aus einer Mülldeponie, Abwasser, Brauchwasser etc., wird über Leitung 7 in den Mischbehälter 2 eingeleitet. Das Ozon-beladene Wasser wird über Leitung 8 in einen Reaktionsbehälter 3 übergeleitet, wo die Wasserinhaltsstoffe durch das Ozon oxidiert und die enthaltenen Schadstoffe abgebaut werden. Das so gereinigte Wasser wird über Leitung 9 abgezogen.

Im Reaktionsbehälter 3 wird das Ozon weitgehend verbraucht und es fällt Sauerstoff-haltiges Abgas an, das über Leitung 10 abgezogen und einer Gasaufbereitungsanlage 4 zugeführt wird. In der Gasaufbereitungsanlage 4 wird das Sauerstoff-haltige Abgas getrocknet und gereinigt. Durch das Abgas aus dem Reaktionsbehälter 2 eventuell mitgerissene Schadstoffe werden in der Gasaufbereitungsanlage 4 vom Sauerstoff-haltigen Abgas abgetrennt und über eine Abgasableitung 11 abgezogen. Das gereinigte Sauerstoff-haltige Abgas wird über Leitung 12 einer Kühleinrichtung 13 zugeführt. Die Leitung 12 geht in die Zuleitung 5 für das Einsatzgas über, d.h. das Sauerstoffhaltige Abgas wird als Einsatzgas für den Ozonerzeuger 1 verwendet.

In der Kühleinrichtung 13 wird dem Sauerstoff-haltigen Abgas flüssiger Sauerstoff zugemischt. Der flüssige Sauerstoff wird einem Flüssigsauerstofftank 19 entnommen und über Leitung 14 in die Leitung 5 eingespeist. Dabei verhindert ein Druckminderer 15 in der Leitung 5, daß der Druck in der Anlage durch die Flüssigsauerstoffeinspeisung zu stark ansteigt. Mittels eines Absperrventils 16 kann die Abgasrückführung in Leitung 5 unterbrochen werden. Regelventil 17 und 18 erlauben eine Steuerung des Mischungsverhältnisses von rückgeführtem Sauerstoff-haltigen Abgas und flüssigen Sauerstoff. In den Leitungen 5 und 14 sind Durchflußmesser 20 und 21 eingeschaltet, mit denen das Mischungsverhältnis kontinuierlich überwacht werden kann.

Das mit flüssigem Sauerstoff versetzte Sauerstoff-haltige Abgas wird über Leitung 5 von der Kühleinrichtung 13 abgezogen und als Einsatzgas zum Ozonerzeuger 1 zurückgeführt. In der Leitung 5 ist eine mit einem Ventil 25 versehene Abgasabführung 24 angeschlossen, über die, falls erforderlich, überschüssiges Abgas abgeführt werden kann. Außerdem sind nach der Einspeisestelle ein Feuchtigkeitsmesser 22 und ein Temperaturmesser 23 in die Leitung 5 eingeschaltet. Die Temperatur des zum Ozonerzeuger 1 rückgeführten Sauerstoffhaltigen Gases bestimmt wesentlich die Ozonausbeute. Eine Überwachung des Feuchtigkeitsgehaltes des Gases ist deshalb vorgesehen, weil ein zu hoher Feuchtigkeitsgehalt den Betrieb des Ozonerzeugers 1 beeinträchtigen würde.

Die Wirkungsweise der Kühleinrichtung 13 läßt sich folgendermaßen zusammenfassen:
In der Kühleinrichtung 13 wird das rückgeführte Sauerstoffhaltige Abgas durch Einspeisen von flüssigem Sauerstoff auf eine Temperatur von ca. -5° C bis ca. -10° C abgekühlt. Das abgekühlte Sauerstoff-haltige Abgas wird als Einsatzgas für den Ozonerzeuger 1 verwendet, wodurch dessen Betriebstemperatur gesenkt und damit dessen Wirkungsgrad deutlich gesteigert wird. Außerdem wird durch die Einspeisung von flüssigem Sauerstoff in das rückgeführte Sauerstoff-haltige Abgas gerade die Sauerstoffmenge ersetzt, die bei den Abbaureaktionen im Reaktionsbehälter 3 verloren geht. Typischerweise geht ca. 10 % Sauerstoff im Reaktionsbehälter 3 verloren, der durch Einspeisung von flüssigem Sauerstoff ersetzt wird.

Mit Hilfe eines in der Figur nicht dargestellten Steuergerätes, das Informationen von den Durchflußmessern 20 und 21 sowie dem Temperaturmesser 23 und dem Feuchtigkeitsmesser 22 erhält, können die Regelventile 17 und 18 so gesteuert werden, daß dem Ozonerzeuger 1 stets ein Einsatzgas mit konstanter Temperatur und Menge über Leitung 5 zugeführt wird. Somit wird eine gleichbleibende Ozonausbeute gewährleistet.

## Patentansprüche

1. Verfahren zur Erzeugung von Ozon aus einem Sauerstoffhaltigen Einsatzgas, **dadurch gekennzeichnet**, daß das Sauerstoff-haltige Einsatzgas durch Wärmetausch mit einem tiefkalt verflüssigten Gas abgekühlt wird.

2. Verfahren nach Anspruch 1, dadurch gekennzeichnet, daß als tiefkalt verflüssigtes Gas flüssiger Sauerstoff verwendet wird.

3. Verfahren nach Anspruch 1 oder 2, dadurch gekennzeichnet, daß das tiefkalt verflüssigte Gas dem Sauerstoff-haltigen Einsatzgas zugemischt wird.

4. Verfahren nach einem der Ansprüche 1 bis 3, wobei das erzeugte Ozon einem Verbraucher zugeführt wird, wo Sauerstoff-haltiges Abgas anfällt, das im Kreislauf zurückgeführt und als Einsatzgas wiederverwendet wird, dadurch gekennzeichnet, daß dem Einsatzgas gerade soviel flüssiger Sauerstoff zugemischt wird, wie durch den Verbrauch an Ozon aus dem Kreislauf ausgeschleust wird.

5. Verfahren nach Anspruch 3 oder 4, dadurch gekennzeichnet, daß das Mischungsverhältnis von tiefkalt verflüssigtem Gas und Einsatzgas so eingestellt wird, daß sich eine Mischtemperatur von ca. 0° C bis ca. -20° C ergibt.

6. Vorrichtung zur Erzeugung von Ozon mit einem Ozonerzeuger, der eine Zuleitung für ein Sauerstoff-haltiges Einsatzgas und eine Ableitung für das Ozon aufweist, **dadurch gekennzeichnet**, daß die Zuleitung (5) für das Einsatzgas mit einer Kühlleitung (14) für ein tiefkalt verflüssigtes Gas in Wärmekontakt steht.

7. Vorrichtung nach Anspruch 6, dadurch gekennzeichnet, daß die Kühlleitung (14) für das tiefkalt verflüssigte Gas in die Zuleitung (5) für das Einsatzgas mündet und das andere Ende der Kühlleitung (14) mit einer Versorgungseinrichtung (19) für das tiefkalt verflüssigte Gas in Verbindung steht.

8. Vorrichtung nach Anspruch 7, dadurch gekennzeichnet, daß die Versorgungseinrichtung (19) als Flüssiggastank für flüssigen Sauerstoff ausgebildet ist.

9. Vorrichtung nach Anspruch 7 oder 8, dadurch gekennzeichnet, daß in die Zuleitung (5) für das Einsatzgas und in die Kühlleitung (14) für das tiefkalt verflüssigte Gas jeweils in Strömungsrichtung vor der Mündung der Kühlleitung (14) in die Zuleitung (5) Durchflußmesser (20, 21) angeordnet sind, die über eine Steuereinheit mit Steuerventilen (17, 18) in der Zuleitung (5) für das Einsatzgas und in der Kühlleitung (14) in Wirkverbindung stehen.

10. Vorrichtung nach Anspruch 9, dadurch gekennzeichnet, daß in die Zuleitung (5) für das Einsatzgas in Strömungsrichtung nach der Mündung der Kühlleitung (14) in die Zuleitung (5) ein Temperaturmeßgerät (23) angeordnet ist, das über die Steuereinheit mit den Steuerventilen (17, 18) in Wirkverbindung steht.
